# EUROPEAN PATENT APPLICATION

(11) **EP 1 717 636 A1**
(43) Date of publication of application: **02.11.2006**
(21) Application number: 05075972.9
(22) Date of filing: 25.04.2005
(51) Int. Cl.: G03C 1/775, G03C 1/795, G03C 1/76, G03C 1/95, G03G 5/10, B41M 5/40, B41M 5/00, B32B 29/00, B32B 27/20, B32B 27/32

(54) **Multi-layer recording support**

(71) Applicant: Fuji Photo Film B.V., 5047 TK Tilburg (NL)
(72) Inventor: Gillissen, Hubert Maria Joseph, 5056 JW Berkel-Enschot (NL); Meijlink, Maarten Constant Gerlach Marie, 5172 CG Kaatsheuvel (NL)
(74) Representative: Winckels, Johannes Hubertus F.

(57) **Abstract**

This invention relates to a support comprising a substrate having a top side and a back side, wherein at least the top side is provided with at least 2 resin layers, wherein the outermost resin layer, which is most distant from the substrate, comprises at least one polyethylene homopolymer or polyethylene copolymer with a density equal to or less than 0.90 g/cm³ and said outermost resin layer has a coating weight of at least 0.2 g/m² and less than 2 g/m².

## Description

### Field of the invention

This invention relates to a support material, in particular a resin coated support material for use in recording applications. The invention further relates to a recording medium comprising such a support material.

### Background of the invention

In general a support material used in recording media comprises a substrate on which at least one resin layer is supplied. On top of this resin layer a receiving medium is applied depending on the recording method used, *e.g*. an emulsion layer for (conventional) photography applications or an ink receiving layer for inkjet applications or a layer for thermal or electro-photographical paper application.

An example of a recording medium is a recording medium for a photographic image in which a paper substrate is coated with a layer of polymer resin, for example polyethylene. On top of this polyethylene layer photographic emulsions are applied in which the image is formed.

Typically, recording media for imaging methods, and in particular recording media for photographic paper, are produced by using a melt-extrusion coating method or co-extrusion method. In (co-)extrusion coating, molten polymer layer(s) is (are) extruded through a slot die at elevated temperatures exceeding 270 °C. While in molten state, the polymer layer(s) is (are) drawn through the nip of two rollers together with the substrate to be coated. One of these rollers, the chill roller, is cooled in order to solidify the polymer layer(s). The other roller, the nip roller, which is usually provided on its circumference with a layer of a compressible material, applies pressure to effect the adhesion of the substrate and the polymer layer(s).

An important aspect of the support is the resin surface appearance, which should be smooth and exhibiting a high gloss. Further it is important that the resin surface of the support does not have too many crater defects, also named pits, which is, without being bound to theory, considered to be caused by air entrapment by the rotation of the chill roll, upon melt-extrusion coating of resin on the substrate. When the number of pits increases, the outer appearance of the support is negatively influenced and as such the quality of the recording media prepared using such a support deteriorates.

The number of pits increases when using higher line-speeds in extrusion coating and therefore it has been difficult to increase the production speed and productivity in the manufacturing of supports for recording media.

The number of pits also increases with a reduction of the total weight of the resin layers of the support. Therefore, it has been difficult to reduce the costs of the supports for recording media. The number of crater defects of a resin coated substrate can be reduced by the increase of the melt temperature of the resin layers above the temperature, which is needed to assure the adhesion of the resin layer(s) with the substrate. However this is generally not preferred because of its associated risks for generating more defects, for instance, because it may give rise to die drool. These defects lead to a deterioration of the appearance of the support and require a production stop to remedy them.

In the prior art various solutions for above mentioned crater defect problems are proposed. EP-A 285 146 describes a method of reducing the number of crater defects at high extrusion line speeds such as 200 m/min, by replacing the air on the chill roller with a gas which can escape more readily through the extruded resin film. Another method at high extrusion line speeds such as 200 m/min is described in JP-A 11 352 638 in which a resin film coming out an extruder is passed between a nip and a cooling roller along with the base material and where the temperature of the resin film in the nip is increased.

EP-A-1 130 460 describes another method at high extrusion line speeds such as 300 m/min in which a paper substrate is heated prior to extrusion coating with polymer resin layer(s). Also other applications propose methods for the reduction of craters with a major disadvantage in the technical complexity or potential risk for damage to production equipment, damage of the proposed system or increased number of production steps in producing the support. So for example in JP 11 352 637 a process is described in which after the first nip, new pressing with hot roller(s) is used, and in US-A-4 994 357 a process is described in which upon extrusion coating the molten resin layer(s) are passed between a chill roller and a back-up roller under a linear pressure up to 200 kg/cm and in JP 59 198 451 a process is described in which the support is prepared by double consecutive extrusion coating.

In the art of providing support materials for recording media there remains a need for low costs and high speed production of the media, whereby the amount of craters defects on the support remains at a sufficiently low level.

### Summary of the invention

It is an object of the present invention to provide a support for recording media with good surface properties, in particular a low amount of crater defects.

It is a further object of the present invention to provide a support for recording media that can be produced at very high line speed during melt extrusion-coating, without sacrifice to the surface properties.

It is a further object of the present invention to provide a support for recording media having a low total thickness of polymer resin expressed as weight of resin per surface area, which can be produced at high extrusion speed, whereby good surface properties are maintained.

It is another object of the present invention to provide a support for recording media at relatively low resin melt temperature with superior surface properties, i.e. a minimum amount of crater defects at high line speed during extrusion coating.

It has now been found that the objects underlying the invention are at least in part achieved by providing a support for a recording medium comprising a substrate having a top side and a back side, wherein at least the top side is provided with at least two resin layers, wherein the outermost resin layer, which is most distant from the substrate, comprise at least one polyethylene homopolymer or polyethylene copolymer with a density equal to or less than 0.90 g/cm³ and said outermost resin layer has a coating weight of at least 0.2 g/m² and less than 2 g/m².

### Detailed description

The present invention provides a support comprising a substrate having a top side and a back side, wherein at least the top side is provided with at least two resin layers, wherein the outermost layer, which is most distant from the substrate, comprises at least one polyethylene with a density equal to or less than 0.90 g/cm³ and the outermost layer is characterised by a weight of at least 0.2 g/m² but smaller than 2.0 g/m².

Herein, the top side is in particular the side that is intended to be provided with a receiving medium, such as a recording medium.

The invention is based thereon that the inventors have discovered that replacing the polyethylene of the outermost layer with a relatively high density (of more than 0.90 g/cm³) for a polyethylene with a density equal to or less than 0.90 g/cm³ leads to a reduction in the occurrence of crater defects.

For a very low occurrence of crater defects the density is preferably 0.875 or less. For practical reasons the density is preferably at least 0.85 g/cm³. The polyethylene with a density equal to or less than 0.90 g/cm³ (in particular less than 0.875) is preferably a metallocene polyethylene. Suitable metallocene polyethylenes are in particular copolymers of ethylene with alphaolefins having 3 to about 14 carbon atoms, like for example 1-propylene,1-butene, 1-hexene or 1-octene, prepared by using metallocene catalysts.

In an embodiment of this invention, the outermost resin layer may comprise (apart from at least one polyethylene with a density equal or less than 0.90 g/cm³) one or more other polyolefins. Preferred examples of such polyolefins are polymers comprising one or more alpha-olefin monomer residues containing at least three carbon atoms; (mixtures of) copolymers of ethylene and of alpha-olefin monomers containing at least three carbon atoms; and (mixtures of) polyethylenes with a density of more than 0.90, in particular between 0.90 and 0.97 g/cm³. The outermost layer may comprise up to 50 weight % of these olefins compared to the total weight of the olefins used in the outermost layer depending on the selected olefin as such that the average density of all polymers in the outermost layer is equal to or less than 0.90 g/cm³.

It was found that when increasing the weight percentage of polyethylenes with densities between 0.90 and 0.97 g/cm³ in the outermost layer the occurrence of crater defects increases again. However as positive side effect this weight increase of polyethylenes with a density between 0.90 and 0.97 g/cm³ will result in an easier chill roll release of the co-extruded coating. Therefore as a trade-off between crater defects and this chill-roll releasing property the outermost layer may comprise preferably at most up to 25 % of relative higher density polyethylenes.

As indicated above, the coating weight of the outermost layer is less than 2.0 g/m². It has been found in particular that when the support is used for example as a support for a photographic printing paper or the like, the presence of an outer layer of 2.0 g/m² or more leads to an undesirable reduction in sharpness of the image on the support, where the sharpness is reducing with an increasing weight of the outermost layer of the support. Also for economical reason it is not preferred to use high weights. Therefore, in a preferred embodiment of the present invention, the outermost layer of the support is applied with a very low weight in the range of 0.2 g/m² to 1.75 g/m². More preferably the weight of the outermost layer is 1.5 g/m² or less. In the most preferred embodiment of this invention the weight is 1.0 g/m² or less.

In the present invention the outermost resin layer may comprise one or more chill-roll releasing agents, like metal-stearates, fluoropolymers, polyalcohols, polyethylene glycol or polypropylene glycol or combinations thereof, in order to improve the release from the chill-roll. The outermost layer of the support of the present invention can be coloured with one or more white opacifying pigments, *e.g*. for improvement of image sharpness in the case that the support is used for instance as a support for a photographic printing paper or for improvement of the whiteness or opacity of the support. This white opacifying pigment may be selected from any of the white pigments described in the art like anatase type titanium dioxide, rutile titanium dioxide, zinc oxide, zinc sulphide, lithopone and the like, or mixtures of any of these. In the most preferred embodiment of the invention the white pigment in the outermost resin layer of the support is an anatase type or rutile type titanium dioxide or a mixture of these types of pigments. Preferably the particle size of the anatase type or rutile type titanium dioxide is between 0.1 µm and 0.4 µm. Preferably the concentration of the white pigment in the outermost layer of the support does not exceed 20 weight % based on the total weight of the outermost layer. Higher amounts may give rise to die drool and these defects will lead to deterioration of the appearance of the support and require a production stop to remedy them. If present, the amount of pigment is at least 5%.

The outermost resin layer of the support of the present invention may be provided with one or more substances, such as known additives for resin coated substrates. In particular the outermost layer may contain additional (small) quantities of one ore more coloured dyes or pigments and/or blueing agents, *e.g*. ultramarine blue and/or violet, cobalt blue, phosphoric oxide cobalt, quinacridone pigments and mixtures of these. One or more optical brighteners, preferably bis-benzoxazole type optical brighteners may be present. One or more antioxidants, *e.g*. hindered phenol type anti-oxidants, phosphite type anti-oxidants, lactone type anti-oxidants and mixtures of these, may be present. Further the outermost layer may comprise one or more additives selected from the group consisting of anti-static agents, UV-stabilisers and light stabilisers, *e.g.* hindered amine light stabilisers, nickel chelates, substitutes benzophenones or benzotriazole. Also, the outermost resin layer of the support of the present invention may be provided with a component which promotes the adhesion of coating layer(s) applied on the surface of the outermost resin layer *e.g.* a gelatin layer when the support is used as a support in the manufacturing of a photographic printing paper. This component which promotes the adhesion of coating layer(s) applied on the surface of the outermost resin layer may be selected from any of the components described in the art like for example co- and terpolymers modified for adhesion promotion with ethylene or polypropylene as one of the monomer components, and acrylic acid, acryl ester, methacrylic acid, methacryl ester, maleic anhydride, vinyl acetate, ionomers and similar as the other monomer component(s).

Alternatively, adhesion of the outermost resin layer to the recording layer (in order to provide the recording medium) can be improved by conventional surface treatment methods known in the art e.g. corona treatment, plasma treatment, flame treatment, heat treatment, chemical priming or combinations of surface treatment methods.

The second resin layer of a support of the present invention usually has a coating weight of between 8 g/m² and 50 g/m², and preferably between 8 g/m² and 25 g/m². The type of resin in the second resin layer of the invention can be chosen from any type of (extrusion coating) resin known in the art, preferably the resin in the second layer of the invention is a polyolefin or olefin copolymer or a mixture of olefinic polymers or co-polymers. In a preferred embodiment of the invention the type of resin used in the second resin layer is a polyethylene resin or a mixture of different polyethylene resins. In the most preferred embodiment of the invention the type of resin used in the second layer is a low density polyethylene resin or a mixture of different low density polyethylene resins. Typical values for density of these low density polyethylene resins are in between 0.915 and 0.930 g/cm³.
The resins or resin mixtures in the resin layers of the present invention can be chosen independently from each other depending on the intended properties of the end product. The values of the melt flow index of the resins or resin mixtures in the second layer of the present invention are chosen in such a way that under the production conditions of the present invention there will be no or an acceptable level of interfacial instability between this second layer and the layer(s) adjacent to this second layer and that there is no or an acceptable level of layer encapsulation. The second resin layer of the present invention may further comprise a white opacifying pigment or a mixture of white opacifying pigments to enhance the whiteness and opacity of the support, or in the case this support is used as a support for a photographic paper to increase the sharpness of the image. This white opacifying pigment can be selected from any of the white pigments described in the art like anatase type titanium dioxide, rutile titanium dioxide, zinc oxide, zinc sulphide, lithopone and the like.

In a most preferred embodiment of the invention the type of white pigment in the second layer of the support of the present invention comprises anatase type or rutile type titanium dioxide or mixture of these pigments. Preferably, the particle size of the anatase type or rutile type titanium dioxide is between 0.1 µm and 0.4 µm. The concentration of the white pigment in the second layer of the support preferably does not exceed 35 weight %, based on the total weight of the second layer. The anatase type titanium dioxide is preferably used in order to obtain the best whiteness property. The pigment types in the outermost layer and in the second layer may be chosen independently from each other. For instance, titanium dioxide of the anatase type may used in one of the layers and titanium dioxide of the rutile type may be used in another layer.

Optionally, the second resin layer of the support of the present invention contains additionally one or more pigments like nacreous pigments and/or (small quantities of) one or more coloured dyes and/or blueing agents, *e.g.* ultramarine blue and/or violet, cobalt blue, phosphoric oxide cobalt, quinacridone pigments and mixtures of these. Further one or more additives from the group consisting of optical brighteners, most preferably bis-benzoxazole type optical brighteners (because these exhibit less tendency to bleed); antioxidants, *e.g.* hindered phenol type anti-oxidants, phosphite type anti-oxidants, lactone type anti-oxidants and mixtures of these; anti-static agents *e.g.* semi-conductive metal oxide particles or inorganic platelet shaped materials *e.g.* mica coated with an anti-static agent, *e.g.* semi-conductive metal oxide; UV-stabilisers and/or light stabilisers, *e.g.* hindered amine light stabilisers, nickel chelates, substitutes benzophenones or benzotriazole, and other additives for resin coated recording media may be selected.

Additionally, the second resin layer of the support of the present invention may contain one or more adhesion promoting additives, *e.g.* as known in the art, in order to improve the adhesion of the second layer with the outermost resin layer, to improve the adhesion of the second resin layer towards a possible third resin coating layer, or, when the second resin layer is the lowermost resin layer which is in contact with the substrate, to improve the adhesion towards this substrate (see *e.g.* US-A-5 466 519 for an example of suitable additives). If desired, the adhesion of the lowermost resin-layer to the substrate can be improved by given the lowermost resin-layer an ozone-melt treatment.

Alternatively, there may be applied a tie layer as described in the art to promote adhesion between the second resin layer and the outermost resin layer, between the second resin layer and a possible third resin coating layer, or, when the second resin layer is the lowermost resin layer which is in contact with the substrate, to improve the adhesion of this second resin layer with this substrate. The tie layer may comprise one or more materials selected from anhydride modified polyolefins such as anhydride modified polypropylene, anhydride modified polyethylene, anhydride modified ethylene vinyl acetate, anhydride modified ethyl methyl acrylate, anhydride modified ethyl acrylic acid, and copolymers and/or other materials like co- and terpolymers modified for adhesion promotion with ethylene or polypropylene as one of the monomer components, and acrylic acid, acryl ester, methacrylic acid, methacryl ester, maleic anhydride, vinylacetate, ionomers and mixtures thereof.

If desired, the adhesion of the resin to the substrate can be improved by giving the tie layer, for instance when the tie layer is the lowermost resin-layer, an ozone-melt treatment.

The melt temperature of the second resin layer of the present invention when utilized as the lowermost resin layer which is in contact with the substrate can be chosen at a sufficiently high level to promote the adhesion of this second layer to the substrate without the need of adhesion promoting additives and/or tie layers. For this, the melt temperature should usually be at least 270 °C.

The application of a third layer below the second resin layer of the present invention may be advantageous in order to prevent the generation of die lip stripes in the case that the second layer of the present invention comprises a high concentration of titanium dioxide or other pigments. The third layer of the present invention may have a coating weight between 1 g/m² and 50 g/m², and preferably between 1 g/m² and 25 g/m².

In a preferred embodiment of the invention, the type of resin used in the third layer is a polyolefin type or a olefin copolymer or a mixture of various olefinic polymer type resins. In the most preferred embodiment of the invention the type of resin used in the third layer is a low density polyethylene resin or a mixture of different low density polyethylene resins. The resins or resin mixtures of this third layer can be chosen independently from the resins of the other layers and may be the same or different depending on the intended properties of the end product. The values of the melt flow index of the resins or resin mixtures in the third layer of the present invention is chosen in such a way that under the production conditions of the present invention there will be no or an acceptable level of interfacial instability between this third layer and the resin layer(s) adjacent to this third layer and in such a way that there is no encapsulation or at least an acceptable level of layer encapsulation.

The third layer of the present invention further preferably comprises a white opacifying pigment or a mixture of white opacifying pigments, most preferably an anatase type or rutile type titanium dioxide or mixture of these pigments with a particle size between 0.1 µm and 0.4 µm. The concentration of the white pigment in the third layer preferably does not exceed 20 weight % based on the total weight of this third layer and most preferably does not exceed 15 weight %. Again here a higher amount may result in die drool and related defects as explained in the outermost layer description. The pigment types in the third layer and in the second resin layer may be chosen independently from each other. So, titanium dioxide of the anatase type may be used in one of the layers and titanium dioxide of the rutile type may be used in the another layer. Optionally, the third layer may comprise additionally (small) quantities of one or more coloured dyes or pigments and/or blueing agents, *e.g.* ultramarine blue and/or violet, cobalt blue, phosphoric oxide cobalt, quinacridone pigments and mixtures of these. In addition one or more additives may be present selected from the group consisting of optical brighteners, most preferably bis-benzoxazole type optical brighteners; antioxidants, *e.g.* hindered phenol type anti-oxidants, phosphite type anti-oxidants, lactone type anti-oxidants and mixtures of these; anti-static agents *e.g.* semi-conductive metal oxide particles; UV-stabilisers and/or light stabilisers, *e.g.* hindered amine light stabilisers, nickel chelates, substitutes benzophenones or benzotriazole and other substances used as known additives for resin coated recording media.

Additionally, the third resin layer of the support of the present invention may comprise adhesion promoting additives as known in the art in order to improve the adhesion of the third layer with the 2^{nd} adjacent resin layer, to improve the adhesion of the third resin layer towards the substrate or when the lower-most resin is a tie layer to improve the adhesion from the third resin-layer to this tie layer. Examples of these adhesion promoting additives are, but not limited to those alone, disclosed in US-A-5 466 519.

In order to promote the adhesion between the third layer and the adjacent 2^{nd} layer and/or the substrate, the usage of a tie layer above and/or below a third layer and/or the usage of an adhesion promoting additive in the third layer is possible. The tie layer can comprise materials as *e.g.* anhydride modified polyolefins such as anhydride modified polypropylene, anhydride modified polyethylene, anhydride modified ethylene vinyl acetate, anhydride modified ethyl methyl acrylate, anhydride modified ethyl acrylic acid, and copolymers and/or other materials like co- and terpolymers modified for adhesion promotion with ethylene or polypropylene as one of the monomer components, and acrylic acid, acryl ester, methacrylic acid, methacryl ester, maleic anhydride, vinylacetate, ionomers and mixtures thereof.

Alternatively, the melt temperature of a third resin layer of the present invention, when utilized as the lowermost resin layer which is in contact with the substrate, can be chosen at a sufficiently high level to promote the adhesion of this third layer to the substrate without the need of expensive adhesion promoting additives and/or tie layers. For this, the melt temperature should be at least 270 °C.

If desired, the adhesion of the resin to the substrate can be improved by given the lowermost resin-layer an ozone-melt treatment.

The support of the present invention, comprising a substrate having a top side and a back side, can also be provided on its back side with at least one resin layer and/or at least one other coating layer depending on the properties to be achieved like for instance waterproofing, anti-static, anti-curling, anti-blocking, anti-slip, splice strength, and/or the ability to receive and retain prints *(e.g.* bar codes or other indicia containing useful information). In the case the intended use of the support of the present invention is *e*.*g*. as the base for a photographic printing paper or a base for an inkjet paper, this back side is preferably extrusion coated with polyethylene resin(s) and most preferably a mixture of low density polyethylene and high density polyethylene. On top of this polymer layer an anti-static coating, an anti-sticking coating and so on may be provided.

The substrate of the support of the present invention can be chosen from any substrate known in the art like natural pulp containing high quality paper, photographic base paper, pigment coated paper, synthetic paper or a polymer sheet material. The preferred substrate in the present invention is natural pulp containing high quality paper or photographic base paper or pigment coated paper with a base weight of 50 to 350 g/m², and most preferably with a base weight of 100 to 250 g/m². When using a pigment coated paper base as the substrate of the recording medium of the present invention, the average surface roughness (Rₐ) which is determined at the top-side of the substrate surface which receives the resin layers in accordance with the present invention, can be higher than those of the prior art, for instance those specified in EP-A-1 126 081, while still obtaining a surface without pits or crater defects. Thus, the use of high pigment coating layer weights and/or the use of supercalendering in the manufacturing of the pigment coated paper substrate can be avoided, which greatly reduces the manufacturing costs of said pigment coated paper substrate. The prior art teaches an average surface roughness Rₐ below 1 µm in order to prevent the occurrence of crater like defects upon applying a polymer resin layer. In the present invention, the average surface roughness of the side of the pigment coated paper substrate, which receives the resin layers can be more than 1 µm. Preferably, the roughness is less than 2.0 µm and more preferably less than 1.5 µm and most preferably less than 1.0 µm. The total dry coating weight of the pigment coating layer, which is applied as an aqueous dispersion of binder and pigments on the paper substrate of the present invention, is preferably less than 60 g/m² and most preferably less than 30 g/m². Even lower total coating weights of the pigment coating layer are possible with the present invention because of the superior ability to reduce the number of crater defects. The whiteness of the pigment coated substrate can be adjusted by addition of white pigments and/or blue dye and/or optical brighteners in the pigmented coating. Its gloss can be adjusted to the required level by calendering and/or super calendering and by selection of the appropriate pigment type(s) and particle size and size distribution. Typical pigments which can be used in the pigment coated paper substrate for the present invention are calcium carbonate, kaolin, barium sulphate, titanium oxide, clay, magnesium-aluminium silicate, aluminium oxide hydroxide, styrene-acrylic copolymers, plastic hollow sphere pigments and combinations thereof. The particle size of the pigments is not particularly limited, but it will be appreciated by those known in the art, that pigments with smaller particle size distributions can have benefits in providing adhesion or gloss. Pigments in which at least 70% of the particles have a size smaller than 1 µm and at least 40% have a size between 0.35 and 0.8 µm may be advantageously used.

Typical binders which can be used in the pigment coated paper substrate for the present invention include conventional styrene-butadiene latex, highly modified styrene butadiene latex, styrene butadiene acetonitrile latex, polyvinyl acetate latex, methyl methacrylate-butadiene latex, styrene acrylate latex, polyacrylate latex, polyvinyl alcohol, starch and other polysaccharide, and combinations thereof.

When using a recording medium comprising a support of the present invention, which has as base substrate a pigment coated paper as a photographic printing paper an additional advantage offered by the pigment coated paper is that the amount of the titanium oxide in the resin layers of the present invention can be decreased because the pigment coating effectively hides the paper part of the substrate. Thus, the manufacturing costs can be decreased additionally without loosing image sharpness compared to traditional photographic printing papers known in the art.

Depending on the use of the support, the layer structure of the support according to the present invention can be applied on the top side only or on the top side and also the back side of the substrate.

If desired, the front surface, and optionally also the back surface of the substrate of the support of the present invention is subjected to an activation treatment before the melt-extrusion process. The treatment may comprise a corona treatment and/or a flame treatment and/or ozone treatment and/or plasma treatment and/or plasma deposition treatment and/or a heat treatment and/or a chemical priming.

The support of the present invention can be manufactured by (tandem) extrusion coating techniques or consecutive extrusion coating techniques as described in the art. Most preferably the support of the present invention is manufactured by a co-extrusion technique in which all resin layers of the present invention and if required tie layers are applied to the substrate at the same time using feed block techniques or multi manifold die techniques. This greatly increases the economy of the manufacturing of the support. In the (co)extrusion coating line. The molten resin which is extruded from the die can furthermore be treated by ozone in order to improve the adhesion between the resin and the substrate. In order to even further improve the adhesion between the resin and the substrate, the melt temperature of the resin layer which is extruded from the die is at least 270 °C.

A preferred speed for the co-extrusion process for the manufacturing of the support of the present invention may be up to 300 m/min, up to 600 m/min or even more than 600 m/min. This even more increases the economy of the manufacturing of the support. It is also possible to reduce the total amount of extrusion coated resin, while keeping the same amount of pits. It is for example possible to reduce the amount of top side coated resins from 30 g/m² to 20 g/m² by changing over from a mono-extrusion coated PE layer to a three layer co-extrusion coated polyolefin layer with an outermost layer comprising a polyethylene with a density equal or less than 0.90 g/cm³ and keeping the same amount of pits.

A preferred nip pressure of the manufacturing of the support of the present invention, where the nip is in between a chill roll and a pressure roll with a pressure function, is preferably below 370 N/cm and more preferred below 320 N/cm and most preferred below 280 N/cm.

A preferred web temperature in the manufacturing of the support of the present invention from the chill roll is between 20 and 65 °C.

The invention further relates to a recording medium, comprising a support as described herein and a receiving medium. The receiving medium is usually provided at the side of the outermost resin layer that is remote from the substrate. The receiving medium may be a photographically active layer, such as an emulsion layer for photography, an ink receiving layer (such as from inkjet applications) a recording layer for thermal paper application or a recording layer for electro-photographical paper application. The recording medium may be manufactured in a manner known in the art.

The invention further relates to the use of a polyethylene having a density of 0.90 g/cm³ or less, preferably of 0.85 to 0.875 to suppress crater defect formation in a support material for an recording medium.

The present invention will be elucidated below in further detail with reference to the examples, but the present invention will not be limited thereto. Unless otherwise indicated, all parts, percents, ratios and the like are by weight.

### Examples

The following abbreviations are used for the different resins which were investigated: LDPE = low density polyethylene; LLDPE = linear low density polyethylene; PE = polyethylene.

All experiments were run on a co-extrusion line equipped with two 4½" and one 2½" extruders, feed-block and coat-hanger die. The substrates were always corona treated prior to extrusion coating by in-line corona treatment stations. All experiments were performed using glossy fine matte chill rollers.

The corona treatment activated photographic base paper (167 g/m²) was co-extruded at line speeds 350 and 400 m/min with three resin layers with a 325 °C melt temperature and 350 N/cm nip pressure, an outermost resin layer of 1 g/m², 12.5 g/m² for the middle layer containing LDPE and 25 % (wt/wt) anatase titanium dioxide and further ultramarine pigments and optical brightener and a 16.5 g/m² lowermost layer adjacent to the base paper containing LDPE and 5% (wt/wt) anatase titanium dioxide and furthermore ultramarine pigments.

The ultramarine pigments used in the examples are a mixture of ultramarine violet and ultramarine blue in the ratio of 2.75 : 1.70. The optical brightener used in the examples is a bis-benzoxazole substituted stilbene type optical brightener. Pigments and optical brighteners were applied from master batches with low density polyethylene as carrier resin.

In the examples the amount and size of the crater defects were measured by microscopy combined with image analysis software provided by Zeiss.

Number of pits is counted and divided into two size classes: 1) < 300 µm²; and 2) > 300 µm². Especially the latter one is the most important for the characterization of crater defects and quality analysis because these defects are visible.
- Roughness (Rₐ) method: : according to ISO 4287-1997
- cut-off wave-length (λc): : 0.8 mm
- sample measuring length :: 5.6 mm
- apparatus/type: : Mahr Perthometer/ M3

The following table 1 summarizes the resins which were used in the outermost layer and their densities and the result of number counts of crater defects.

In all listed examples the only difference is, that the outermost layer composition is changed from resin-composition.

In all examples the outermost layer weight is 1 g/m².

**TABLE 1**

| | | 350 m/min | | 400 m/min | |
|---|---|---|---|---|---|
| PE outermost layer | Density | < 300 µm² | >300 µm² | < 300 µm² | >300 µm² |
| | (g/m³) | (counts) | (counts) | (counts) | (counts) |
| LLDPE Stamylex™ 1046F | 0.914 | 283 | 150 | 418 | 223 |
| Metallocene PE Exact™ 8210 | 0.882 | 230 | 132 | 401 | 195 |
| Metallocene PE Engage™ 8130 | 0.870 | 106 | 51 | 160 | 83 |

This data table clearly demonstrates that the number of counts and crater defects are reduced when the polyethylene density in the outermost layer is reduced. Furthermore it is clearly visible that it is possible to produce at higher line speeds for PE's with densities below 0.90 g/m³. For example lower amount of counts (>300 crater µm²) and crater defects (*i.e*. 211) are estimated at 600 m/min line speed by extrapolation, assuming a linear relationship for the counts increase versus line speed increase for a Metallocene PE Engage™ 8130 compared to that of the reference LLDPE Stamylex™ at 400 m/min (*i.e*. 223).

## Claims

1. Support for a recording medium comprising a substrate having a top side and a back side, wherein at least the top side is provided with at least two resin layers, wherein the outermost resin layer comprises at least one polyethylene homopolymer or polyethylene copolymer with a density equal to or less than 0.90 g/cm³ and said outermost resin layer has a coating weight of at least 0.2 g/m² and less than 2 g/m².

2. Support according to claim 1, wherein the coating weight is 1.75 g/m² or less, preferably 1.5 g/m² or less and most preferred 1.0 g/m² or less.

3. Support according to claim 1 or 2, wherein said polyethylene with a density equal or less than 0.90 g/cm³ is a metallocene polyethylene.

4. Support according to claim 1 to 3, wherein said outermost layer comprises at least one polyolefine selected from the group consisting of polymers of an alpha-olefin monomer comprising at least 3 carbon atoms and copolymers of ethylene and alpha-olefin monomers having at least 3 carbon atoms and of polyethylenes with a density between 0.90 and 0.97 g/cm³.

5. Support according to claim 1 to 4, wherein the polyethylene with a density of less than 0.90 g/cm³ is present in a concentration of at least 50 wt. % based on the total weight of the polymers used in the outermost layer, more preferably more than 75 wt. %.

6. Support according to any of the preceding claims, wherein said outermost layer further comprises at least one polyethylene with a density between 0.90 and 0.97 g/cm³, preferably in a concentration not exceeding 25 wt. %, based on the total weight of the polymers used in the outermost layer.

7. Support according to any of the preceding claims, wherein said outermost layer further comprises at least one chill-release improving agent, in particular at least one chill-release improving agent selected from the group consisting of metal-stearates, fluoropolymers, polyalcohols, polyethylene glycol and polypropylene glycol.

8. Support according to any of the preceding claims, wherein said outermost layer comprises a one or more opacifying and/or coloured pigments.

9. Support according to any of the preceding claims, wherein the second resin layer comprises a polyethylene resin.

10. Support according to any of the preceding claims, wherein said second layer has a coating weight between 8 g/m² and 50 g/m², and preferably between 8 g/m² and 25 g/m².

11. Support according to claim 10, wherein said second layer comprises one or more opacifying and/or coloured pigments.

12. Support according to any of the preceding claims, wherein at least a third resin layer is provided in between the outermost layer and the substrate and which comprises preferably a polyethylene resin or mixtures of polyethylene resins.

13. Support according to claim 12, wherein said third layer has a coating weight between 1 g/m² and 50 g/m², and preferably between 1 g/m² and 25 g/m².

14. Support according to claim 12 or 13, wherein said third layer further comprises a one or more opacifying and/or coloured pigments.

15. Support according to any of the preceding claims, wherein said substrate is a raw base paper, a pigment coated paper, a synthetic paper or a polymer sheet material.

16. Support according to any of the preceding claims, wherein said substrate is a pigment coated paper with an average surface roughness (Rₐ) on the side of the pigment coated paper, which receives the resin layers, of less than 2.0 µm more preferably of less than 1.5 µm and most preferably below 1.0 µm.

17. Method for manufacturing a support according to any of the previous claims wherein said support is manufactured using a co-extrusion coating technique.

18. Method according to claim 17, wherein at least two resin layers are co-extruded simultaneously via a feedblock or a multi manifold die at elevated temperature on a moving substrate having a certain line speed, said resin layers and substrate coming together in a nip having a nip pressure, where the nip is in between a chill roll having a chilling function and a pressure roll having a pressure function and where the support is removed from the chill roll with a lower temperature than that of the polymer resin melt.

19. Method for manufacturing a support according to claim 17 or 18, wherein said support is manufactured with a line speed of at least 300 m/min.

20. Method for manufacturing a support according to any of the claims 17 to 19, wherein said support is manufactured with a melt temperature of at least 270 °C.

21. Method for manufacturing a support according to any of the claims 17 to 20, wherein the nip pressure is below 370 N/cm, preferably below 320 N/cm and most preferably below 280 N/cm.

22. Method according to any of the claims 17 to 21, wherein said support is taken of from the chill roll with a web-temperature between 20 and 65 °C.

23. Recording medium, comprising a support according to any of the claims 1 to 16 and a receiving medium.

24. Use of a polyethylene having a density of 0.90 g/cm³ or less, preferably of 0.85 to 0.875 to suppress crater defect formation in a support material for a recording medium.
